(19) Europäisches Patentamt
European Patent Office
Office européen des brevets

(11) **EP 0 884 831 A2**

(12) **EUROPÄISCHE PATENTANMELDUNG**

(43) Veröffentlichungstag:
**16.12.1998 Patentblatt 1998/51**

(51) Int Cl.⁶: **H02M 7/48**, H02M 5/45

(21) Anmeldenummer: **98810305.7**

(22) Anmeldetag: **09.04.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **17.05.1997 DE 19720787**

(71) Anmelder: **Asea Brown Boveri AG**
**5401 Baden (CH)**

(72) Erfinder: **Steimer, Peter, Dr.**
**5424 Unterehrendingen (CH)**

(74) Vertreter: **Weibel, Beat et al**
**Asea Brown Boveri AG**
**Immaterialgüterrecht(TEI)**
**Haselstrasse 16/699 I**
**5401 Baden (CH)**

(54) **Verfahren zum Betrieb einer leistungselektronischen Schaltungsanordnung**

(57) Es wird ein Verfahren zum Betrieb einer leistungselektronischen Schaltung mit einem ersten Stromrichter und mindestens einem zweiten Stromrichter angegeben. Die pulsdauermodulierte Ansteuerung der Schalter der Schaltungsanordnung erfolgt nach Massgabe eines Vergleichs einer Referenzschwingung mit einer Trägerschwingung. Nach der Erfindung wird nun der Referenzschwingung, über nahezu den ganzen Aussteuerungsbereich und insbesondere auch bei geringen Aussteuerungsraten im Bereich von 20% bis ca. 87% ein Anteil einer dritten harmonischen Oberschwingung beigemischt. Im Bereich von 20% bis ca. 33% Aussteuerung kann auch ein entsprechender Anteil einer neunten Harmonischen beigemischt werden. Dadurch erreicht man für den ersten Stromrichter eine tiefe Taktfrequenz, und der zweite Stromrichter muss nicht rückspeisefähig sein.

Fig.1

EP 0 884 831 A2

Printed by Jouve, 75001 PARIS (FR)

## Beschreibung

### Technisches Gebiet

Die Erfindung bezieht sich auf das Gebiet der Leistungselektronik. Sie geht aus von einem Verfahren zum Betrieb einer leistungselektronischen Schaltungsanordnung nach dem Oberbegriff des Anspruchs 1.

### Stand der Technik

Eine solches Verfahren ist aus der nicht vorveröffentlichten Deutschen Patentanmeldung 196 15 855.9 bekannt. Es handelt sich dabei um eine leistungselektronische Schaltungsanordnung, bei der eine verbesserte Approximation der sinusförmigen Ausgangsspannung dadurch erreicht werden soll, dass mindestens zwei hintereinandergeschaltete Stromrichter vorgesehen sind, die derart angesteuert werden, dass die Zwischenkreisspannungen der Stromrichter beliebig kombiniert werden können.

Wird die Zwischenkreisspannung des ersten Stromrichters grösser als diejenige des zweiten gewählt, so stellen die zweiten Stromrichter sogenannte Feinstufen dar, deren Ausgangsspannung zu derjenigen des ersten Stromrichters addiert oder subtrahiert werden kann. Die Schalter der Stromrichter werden durch eine pulsdauermodulierte Impulsfolge angesteuert, die z.B. durch Vergleich einer Referenzschwingung mit einer Trägerschwingung erzeugt wird. Bei Vollaussteuerung, d.h. maximaler Ausgangsspannung und maximaler Frequenz soll der grösste Teil der Ausgangsspannung durch den langsam taktenden ersten Stromrichter gebildet werden. Dieser wird vorzugsweise auch mit leistungsfähigen GTOs ausgerüstet, während der zweite z.B. mit IGBTs bestückt sein kann. Die Schaltfrequenz des ersten Stromrichters sollte möglichst gering sein, damit die Schaltverluste nicht zu gross werden. Bei geringer Aussteuerung, d.h. geringer Frequenz und geringer Ausgangsspannung kann dadurch aber der Fall auftreten, dass die Leistung des zweiten Stromrichters negativ wird, d.h. dass er Leistung abgibt. Die entspricht einer Rückspeisung von Energie aus dem zweiten Stromrichter. Dies ist jedoch unerwünscht, die Schaltungsanordnung kostengünstiger wird, wenn sie nicht zur Aufnahme von rückgespeister Energie fähig sein muss.

### Darstellung der Erfindung

Aufgabe der Erfindung ist es deshalb, ein Verfahren zum Betrieb einer leistungselektronischen Schaltungsanordnung anzugeben, mit dem sowohl eine möglichst tiefe Schaltfrequenz des ersten Stromrichters als auch keine Rückspeisung von Energie aus dem zweiten Stromrichter erreicht wird. Diese Aufgabe wird durch die Merkmale des ersten Anspruches gelöst.

Kern der Erfindung ist es also, dass der Referenzschwingung, die zur Erzeugung der pulsdauermodulierten Steuersequenzen für die Schalter benötigt wird, über nahezu den ganzen Aussteuerungsbereich und insbesondere auch bei geringen Aussteuerungsraten im Bereich von 20% bis ca. 87% ein Anteil einer dritten harmonischen Oberschwingung beigemischt wird. Die Amplitude der beigemischten dritten Harmonischen darf dabei nur so gross gewählt werden, dass die Summe der Grundschwingung und der dritten Harmonischen einen vorgegebenen Maximalwert der Referenzschwingung nicht überschreitet. Für die Abhängigkeit des Anteils der dritten Harmonischen nach Massgabe des Grades der Aussteuerung gelten vorzugsweise folgende Beziehungen:

$\hat{a}_1$: Amplitude des Anteils mit der Frequenz $f_1$ der Referenz- und somit auch der Ausgangsspannung der leistungselektronischen Schaltungsanordnung

$\hat{a}_3$: Amplitude des Anteils der Referenz- und somit auch der Ausgangsspannung der leistungselektronischen Schaltungsanordnung mit der Frequenz $3 \cdot f_1$

Erfindungsgemäss soll die $\hat{a}_3$-Komponente immer derart gesteuert werden, dass die maximale Amplitude ($A_{max}$) der Referenzspannung immer erreicht wird. Es gilt somit abgeleitet aus der Referenzspannung bei $\omega t = \pi/2$:

$$\hat{a}_1 - \hat{a}_3 = A_{max} = 1 \text{ p.u.} \tag{1}$$

Bei Nennfrequenz wird, um die Aussteuerung der Stromrichter zu erhöhen, typisch eine 3. Oberschwingung mit der Amplitude von $\hat{a}_{3N}$, z.B. gleich 13%, beigemischt. Es gilt in diesem Betriebsfall bei $\omega t = \pi/2$:

$$\hat{a}_1 - \hat{a}_{3N} = A_{max} = 1 \text{ p.u.} \tag{2}$$

In Funktion von $f_1$ gilt somit folgender Zusammenhang:

$$\hat{a}_1 = (A_{max} + \hat{a}_{3N}) \cdot f_1 \tag{3}$$

unter der Voraussetzung, dass eine frequenzproportionale Aussteuerung erreicht werden soll.

Somit ergibt sich aus (1) und (3)

$$\hat{a}_3 = -A_{max} + (A_{max} + \hat{a}_{3N}) \cdot f_1$$

| Zum Beispiel: | $A_{max} = 1$ und $\hat{a}_{3N} = 0.13$ |
|---|---|
| $f_1 = 1$ : | $\hat{a}_3 = 0.13$ |
| $f_1 = 0.87$ : | $\hat{a}_3 = 0$ |
| $f_1 = 0.8$ : | $\hat{a}_3 = -0096$ |
| $f_1 = 0.5$ : | $\hat{a}_3 = -0.435$ |
| $f_1 = 0.2$ : | $\hat{a}_3 = -0.774$ |

Der erste und zweite Stromrichter kann wahlweise nach der Art eines Dreipunktwechselrichters oder eines Zweipunktwechselrichters aufgebaut sein.

Analoge Ergebnisse bezüglich der Leistungsaufteilung können auch mit der 9., der 27. usw. Harmonischen erreicht werden. Die Modulation mit diesen Oberschwingungen stellt vor allem im unteren Drehzahlbereich eine vorteilhafte Alternative dar.

Durch das erfindungsgemässe Verfahren schwingt zwar der Sternpunkt einer angeschlossenen Maschine mit der dritten Harmonischen, doch der grosse Vorteil liegt darin, dass bei gleichzeitig möglichst tiefer Schaltfrequenz des ersten Stromrichter und dadurch bedingten tiefen Schaltverlusten die Leistung des zweiten Stromrichters nie negativ wird. Dies ermöglicht eine einfachere und kostengünstigere Auslegung der Schaltungsanordnung sowie einen erhöhten Wirkungsgrad.

**Kurze Beschreibung der Zeichnungen**

Nachfolgend wird die Erfindung anhand von Ausführungsbeispielen im Zusammenhang mit den Zeichnungen näher erläutert.

Es zeigen:

**Fig. 1**     Ein Ersatzschaltbild einer Schaltungsanordnung, für die das erfindungsgemässe Verfahren geeignet ist;

**Fig. 2-10**     Verschiedene Spannungsverläufe, die mit dem erfindungsgemässen Verfahren erzeugt werden können.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

**Wege zur Ausführung der Erfindung**

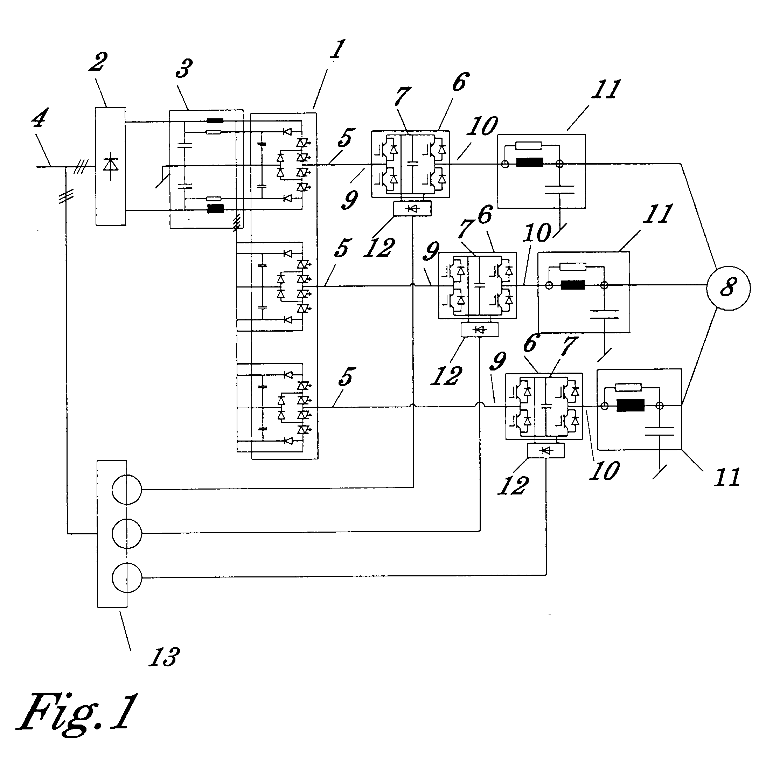

Figur 1 zeigt ein Schaltschema einer Schaltungsanordnung, für die das erfindungsgemässe Verfahren geeignet ist. Mit 1 ist ein erster Stromrichter bezeichnet, der über einen ersten Gleichrichter 2 und einen ersten Gleichspannungszwischenkreis 3 an ein Energieversorgungsnetz 4 angeschlossen ist. Der erste Gleichspannungszwischenkreis weist eine Spannung Uzk1 auf. Der Stromrichter 1 ist in dem dargestellten Ausführungsbeispiel als dreiphasiger Dreipunktwechselrichter ausgebildet. Eine Zweipunktwechselrichtertopologie wäre aber auch möglich. Die Phasen sind an den ersten Gleichspannungszwischenkreis 3 angeschlossen, der von dem Energieversorgungsnetz 4 über den ersten Gleichrichter 2 gespeist wird. An die Lastanschlüsse 5 des ersten Stromrichters sind zweite Stromrichter 6 angeschlossen. Im Ausführungsbeispiel nach Figur 1 umfassen die zweiten Stromrichter zwei Brückenzweige mit einem ersten und einem zweiten Brückenanschluss 9 und 10. Der erste Brückenanschluss 9 steht mit dem jeweiligen Lastanschluss 5 des ersten_Stromrichters in Verbindung, während der zweite Brückenanschluss 10 über ein allenfalls dazwischen geschaltetes Filter 11 mit den Anschlüssen einer Last 8, z.B. eines dreiphasigen Drehstrommotors verbunden ist. Zwischen den Brückenzweigen der zweiten Stromrichter 6 ist ein zweiter Gleichspannungszwischenkreis 7 mit einer Spannung Uzk2 vorgesehen. Dieser zweite Gleichspannungszwischenkreis wird durch einen von einem zweiten Gleichrichter 12 gespeisten Kondensator gebildet. Die Gleichrichter 12 können beispielsweise über einen Transformator 13 vom Spannungsversorgungsnetz 4 gespeist werden. Die zweiten Stromrichter 6 könnten aber auch einen Aufbau nach der Art eines Dreipunktwechselrichters aufweisen.

Die Schaltung funktioniert wie folgt:

Durch Ansteuerung der Halbleiterschalter des ersten Stromrichters 1 kann an die Lastanschlüsse 5 entweder die positive oder die negative Zwischenkreisspannung Uzk1 oder 0 Volt geschaltet werden. Zu dieser Spannung kann nun durch entsprechende Ansteuerung der Halbleiterschalter der zweiten Stromrichter 6 die positive oder negative Zwischenkreisspannung Uzk2 oder 0 Volt addiert werden. Die Ansteuerverfahren und die Funktion der Halbleiterschalter wird als bekannt vorausgesetzt und an dieser Stelle nicht weiter erläutert. Die pulsdauermodulierten Schaltbefehle der Schalter können beispielsweise durch Vergleich einer im wesentlichen sinusförmigen Referenzschwingung mit einer dreieckigen Trägerschwingung erfolgen. Weist die Referenzschwingung die maximal erlaubte Frequenz und die maximal erlaubte Amplitude auf, so spricht man von Vollaussteuerung. Der Grad der Aussteuerung nimmt proportional zur Frequenz ab.

Vorzugsweise wird der erste Stromrichter 1 mit leistungsfähigen GTOs ausgerüstet, während der zweite Stromrichter 6 mit IGBTs bestückt ist. Der erste Zwischenkreis 3 kann beispielsweise auf 2.7 kV ausgelegt sein und der zweite auf 900 V. In diesem Fall kann mit der Schaltungsanordnung eine Wechselspannung erzeugt werden, die zwischen 0 V und +/- 3.6 kV variiert. Durch entsprechende Auslegung der Zwischenkreise oder der Topologie der Stromrichter können auch andere Werte erreicht werden.

Die Schaltverluste im ersten Stromrichter 1 sind aufgrund der Verwendung von GTOs und der höheren Spannung grösser als in den zweiten Stromrichtern 6. Deshalb wäre es wünschenswert, wenn der erste Stromrichter 1 über den gesamten Aussteuerungsbereich und insbesondere auch bei geringer Aussteuerung möglichst langsam getaktet werden könnte. Eine Möglichkeit wäre, dass der zweite Stromrichter 6 zur Verminderung der Ausgangsspannung eingesetzt würde, d.h. dass die zweite Zwischenkreisspannung Uzk2 von der ersten Uzk1 bzw. von 0 Volt abgezählt würde. Dann tritt aber ein Energierückfluss aus dem zweiten Stromrichter 6 in das Energieversorgungsnetz 4 auf, und der zweite Stromrichter müsste rückspeisefähig ausgelegt werden. Deshalb wäre es ausserdem wünschenswert, wenn der zweite Stromrichter 6 keine Energie zurückspeisen müsste.

Dieses Problem wird nun nach der Erfindung dadurch gelöst, dass der Referenzschwingung über nahezu den ganzen Aussteuerungsbereich und insbesondere auch bei geringer Aussteuerung im Bereich von ca. 20% bis ca. 87%, d.h. bei einer 60 Hz Anordnung zwischen 12 Hz und ca. 54 Hz, ein Anteil einer dritten harmonischen Oberschwingung der Grundschwingung beigemischt wird. Die Amplitude der dritten Harmonischen wird so gewählt, dass die Summe der Grundschwingung und der dritten Harmonischen in keinem Fall den maximal erlaubten Wert der Referenzschwingung übersteigt.

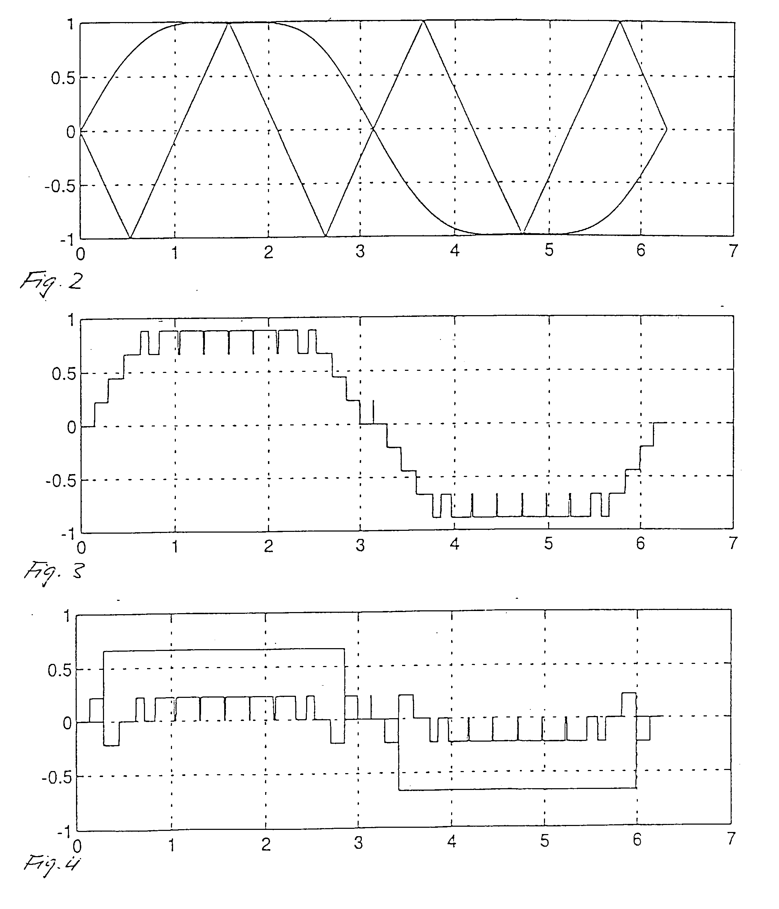

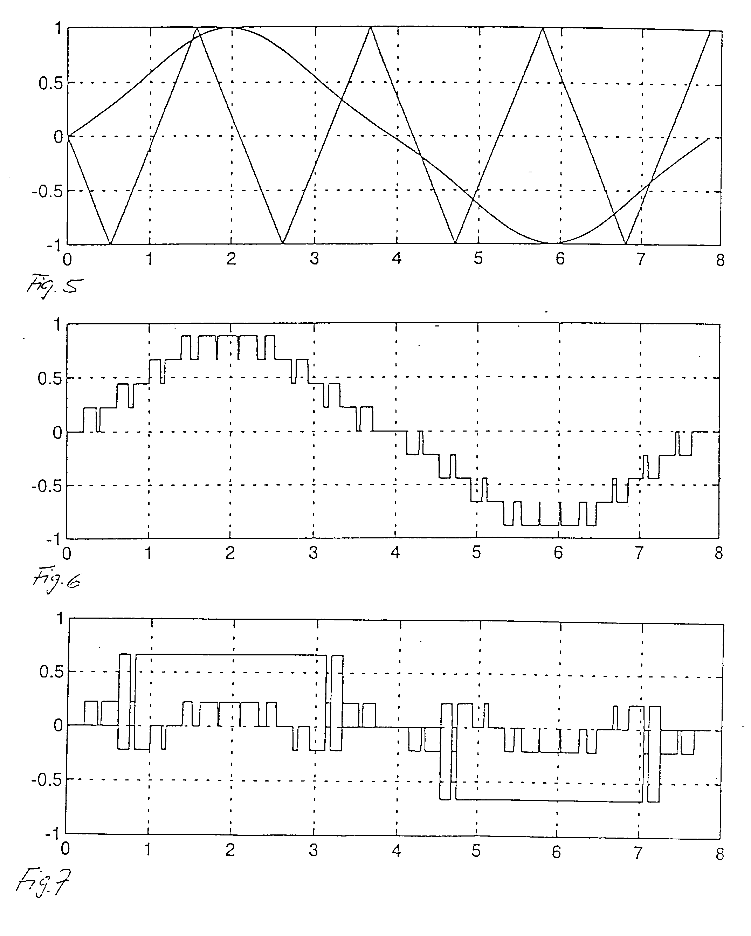

Figur 2 zeigt die normierte Referenzschwingung und die Trägerschwingung bei voller Aussteuerung (z.B. 60 Hz). Der Anteil der dritten Harmonischen beträgt 0.13. Die dritte Harmonische muss also im Bereich bei $\omega t = \pi/2$ abgezählt werden, um obige Vorschrift nicht zu verletzen ($\sin\omega_1 t + 0.13 \sin(3\omega_1 t)$). Dadurch wird die Referenzschwingung etwas abgeflacht. Figur 3 zeigt eine Phasenspannung und Figur die Schaltbefehle der Schalter. Langsam taktend sind die Schaltbefehle für den Stromrichter 1 und mit 12 Mal schneller taktend sind die Schaltbefehle für den Stromrichter 6 dargestellt.

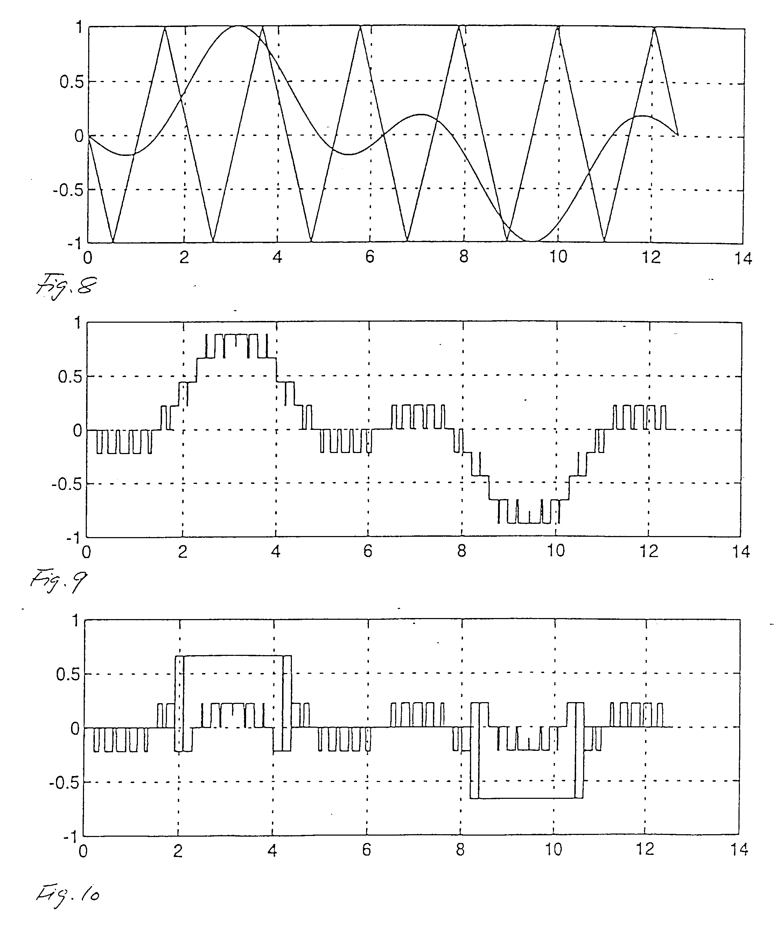

Die Figuren 5 bis 7 zeigen die entsprechenden Spannungsverläufe bei einer 80% Aussteuerung (d.h. z.B. 48 Hz). Hier beträgt der Anteil der dritten Harmonischen -0.096, die dritte Harmonische wird also bei $\omega t = \pi/2$ hinzugezählt.

Die Figuren 8 bis 10 zeigen schliesslich gleichen Spannungsverläufe bei einer Aussteuerung von 50% (d.h. z.B. 30 Hz). In diesem Fall beträgt der Anteil der dritten Harmonischen bereits -0.435.

Ab einer Aussteuerung von weniger als 20% wird der erste Stromrichter 1 überhaupt nicht mehr angesteuert, und die volle Last liegt am zweiten Stromrichter 6.

Durch das erfindungsgemässe Beimischen eines Anteils der dritten Harmonischen schwingt der Sternpunkt des angeschlossenen Motors 8 mit der Frequenz der dritten Harmonischen. Dies ist aber für den Betrieb des Motors 8 nicht störend.

Der Anteil der dritten Harmonischen in Abhängigkeit der Aussteuerung kann wie folgt angegeben werden:

EP 0 884 831 A2

$$\hat{a}_3 = -A_{max} + (A_{max} + \hat{a}_{3N}) \cdot f_1$$

$$A_{max} = 1 \text{ p.u.}$$

Bei niedriger Aussteuerung kann an der Stelle der dritten Harmonischen auch ein Anteil einer neunten Harmonischen hinzugemischt werden. Eine reduzierte Leistungspulsation im Zwischenkreis des zweiten Stromrichters erreicht man beispielsweise dadurch, dass an Stelle der dritten Harmonischen ab ca. 33% Aussteuerung eine neunte Harmonische mit einer Amplitude $\hat{a}_9$ nach Massgabe der folgenden Beziehung beigemischt wird:

$$\hat{a}_9 = -A_{max} + (A_{max} + \hat{a}_{3N}) \cdot f_1.$$

Mit dem erfindungsgemässen Verfahren konnte für eine maximale Aussteuerung der Schaltungsanordnung bei 60 Hz über den gesamten Aussteuerungsbereich eine maximale Taktfrequenz des ersten Stromrichters 1 von 300 Hz erreicht werden. Eine Rückspeisung von Energie aus den zweiten Stromrichtern 6 konnte vermieden werden, und der Wirkungsgrad des gesamten System lag im Bereich von 99%. Die Schaltverluste konnten also äusserst gering gehalten werden.

**Bezugszeichenliste**

1 erster Stromrichter
2 erster Gleichrichter
3 erster Gleichspannungszwischenkreis
4 Energieversorgungsnetz
5 Lastanschlüsse des ersten Stromrichters
6 zweiter Stromrichter
7 zweiter Gleichsp annungszwischenkreis
8 Last
9 erster Brückenanschluss
10 zweiter Brückenanschluss
11 Filter
12 zweiter Gleichrichter
13 Transformator

**Patentansprüche**

1. Verfahren zum Betrieb einer leistungselektronischen Schaltungsanordnung mit

- einem ersten, vorzugsweise mehrphasigen Stromrichter (1), der über einen ersten Gleichspannungszwischenkreis (3) mit einer ersten Zwischenkreisspannung Uzk1 und einen ersten Gleichrichter (2) an ein Energieversorgungsnetz (4) angeschlossen ist und der pro Phase einen Lastanschluss (5) aufweist;
- mindestens einem zweiten Stromrichter (6) mit einem zweiten Gleichspannungszwischenkreis (7) mit einer zweiten Zwischenkreisspannung Uzk2, welcher zweite Stromrichter(6) an einen Lastanschluss (5) des ersten Stromrichters angeschlossen ist; wobei
- die ersten und zweiten Stromrichter (1, 6) Schalter aufweisen, die nach Massgabe eines Vergleiches einer im wesentlichen sinusförmigen Referenzschwingung mit mindestens einer Trägerschwingung derart pulsdauermoduliert angesteuert werden, dass die zweite Zwischenkreisspannung Uzk2 zur ersten Zwischenkreisspannung Uzk1 hinzuzählbar oder abzählbar ist und am Ausgang der leistungselektronischen Schaltung ein Abbild der Referenzschwingung erzeugt wird;

dadurch gekennzeichnet, dass

5

- der Referenzschwingung über nahezu den ganzen Aussteuerungsbereich der leistungselektronischen Schaltungsanordnung und insbesondere auch bei einer Aussteuerung von mehr als ca. 20% und weniger als ca. 87% ein Anteil einer dritten harmonischen Oberschwingung beigemischt wird.

2. Verfahren nach Anspruch 1, dadurch gekennzeichnet, dass die Amplitude der beigemischten dritten Harmonischen derart gewählt wird, dass eine Summe der Grundschwingung und der dritten Harmonischen jederzeit einen maximal erlaubten Wert der Referenzschwingung nicht überschreitet.

3. Verfahren nach Anspruch 2, dadurch gekennzeichnet, dass die Amplitude $\hat{a}_3$ der dritten Harmonischen nach Massgabe des Grades der Aussteuerung wie folgt gewählt wird:

$$\hat{a}_3 = -A_{max} + (A_{max} + \hat{a}_{3N}) \cdot f_1,$$

mit $A_{max} = 1$ p.u. (Maximal erlaubter Wert der Referenzspannung)
$\hat{a}_{3N}$ = Anteil der 3. Harmonischen, der bei $f_1 = f_{1N}$ (Nennfrequenz) = 1 p.u. beigemischt wird.

4. Verfahren nach Anspruch 2 und 3, dadurch gekennzeichnet, dass an Stelle der dritten Harmonischen ab ca. 33% Aussteuerung eine neunte Harmonische mit einer Amplitude $\hat{a}_9$ nach Massgabe der folgenden Beziehung beigemischt wird:

$$\hat{a}9 = -A_{max} + (A_{max} + \hat{a}_{3N}) \cdot f_1.$$

5. Verfahren nach einem der Ansprüche 1 bis 4, dadurch gekennzeichnet, dass der erste Stromrichter (1) nach der Art eines Zweipunktwechselrichters aufgebaut ist und der zweite Stromrichter (6) nach der Art eines Zwei- oder Dreipunktwechselrichters aufgebaut ist.

6. Verfahren nach einem der Ansprüche 1 bis 4, dadurch gekennzeichnet, dass der erste Stromrichter (1) nach der Art eines Dreipunktwechselrichters aufgebaut ist und der zweite Stromrichter (6) nach der Art eines Zwei- oder Dreipunktwechselrichters aufgebaut ist.

**Fig.1**

Fig. 2

Fig. 3

Fig. 4

Fig. 5

Fig. 6

Fig. 7

Fig. 8

Fig. 9

Fig. 10